# EUROPEAN PATENT SPECIFICATION

(11) **EP 1 836 275 B1**
(45) Date of publication and mention of the grant of the patent: **03.10.2012**
(21) Application number: 06702711.0
(22) Date of filing: 12.01.2006
(51) Int. Cl.: C09K 19/00, C09K 19/40, C07F 7/08

(54) **LIQUID CRYSTAL COMPOSITION COMPRISING NOVEL SILICON CONTAINING COMPOUNDS AND LIQUID CRYSTAL DISPLAY DEVICE USING THE SAME**
FLÜSSIGKRISTALLZUSAMMENSETZUNG MIT NEUEN SILICIUMHALTIGEN VERBINDUNGEN UND FLÜSSIGKRISTALLANZEIGEVORRICHTUNG DAMIT
COMPOSITION DE CRISTAUX LIQUIDES COMPRENANT DE NOUVEAUX COMPOSES CONTENANT DU SILICIUM, ET DISPOSITIF D'AFFICHAGE A CRISTAUX LIQUIDES DANS LESQUELS CETTE COMPOSITION EST UTILISEE

(30) Priority: 13.01.2005 KR 20050003157
(43) Date of publication of application: 26.09.2007
(73) Proprietor: LG Chemical, Ltd., Yongdungpo-gu, Seoul 150-721 (KR)
(72) Inventor: CHEONG, Jae-ho 112-1102, Samsung Pureun Apartment, Daejeon 305-727 (KR); KO, Min-jin 105-1406, Luckyhana Apartment, Daejeon 305-721 (KR); KANG, Dae-ho 101-1409, Hwangsil Apartment, Daejeon 302-792 (KR); LEE, Ki-youl, Daejeon 305-340 (KR); KIM, Youn-bong, Seoul 157-832 (KR)
(74) Representative: HOFFMANN EITLE
(86) International application number: PCT/KR2006/000131
(87) International publication number: WO 2006/075882

(56) References cited:
- EP-A- 1 160 250
- WO-A-03/040812
- DE-A1- 10 222 509
- JP-A- 10 114 894
- JP-A- 11 029 580
- JP-A- 11 061 133
- JP-A- 2002 255 974
- US-A- 4 730 904
- US-A- 5 399 290
- US-A1- 2001 038 091

## Description

### Technical Field

The present invention relates to a novel silicon-containing compound and a liquid crystal composition comprising the same. More particularly, the present invention relates to a novel nematic liquid crystal compound, which has low viscosity and high positive dielectric anisotropy, a liquid crystal composition comprising the same compound, and a liquid crystal display device using the same composition.

### Background Art

In general, liquid crystal compounds having optical anisotropy (Δn) and dielectric anisotropy (Δε) are widely used in display devices such as clocks, notebook PCs, mobile phones, televisions and monitors. Such liquid crystal compounds are increasingly in demand. Liquid crystal compounds used in such display devices include a nematic liquid crystal phase, a smectic liquid crystal phase and a cholesteric liquid crystal phase. Among those phases, nematic phases are the most widely used. In practice, various liquid crystal compounds are used in the form of a composition. Liquid crystal compositions should be stable against water, light, heat, air, electric fields or the like, and have to ensure the chemical stability among the compounds forming the composition under the conditions of particular use. In order to use a liquid crystal compound in a display device, the liquid crystal compound should be in harmony of physical properties, including a wide range of liquid crystal phase temperatures, optical anisotropy value (Δn) and dielectric anisotropy value (Δε), viscosity and conductivity. Properties of a liquid crystal compound required for a display device depend on the specific type of the display device. Therefore, there is an imminent need for a novel liquid crystal device that satisfies the above properties at the same time. Recently, there has been a need for a liquid crystal display device having a fast response time in order to treat a great amount of information promptly.

JP-A-11-029580, JP-A-10-114894, JP-A-2002-255974, US-A-5,399,290, JP-A-11-061133, WO 03/040812, DE-A-102 22 509, EP-A-1 160 250, US-A-4,730,904 and US-A-2001/038091 all teach silicon-containing compounds including aromatic and/or alicyclic groups which may be used as components of a liquid crystal composition.

### Disclosure of the Invention

Therefore, the present invention has been made in view of the above-mentioned problems: It is an object of the present invention to provide a novel liquid crystal compound, which has low viscosity as well as high negative dielectric anisotropy so as to permit optimization of display. It is another object of the present invention to provide a liquid crystal composition comprising the above compound. It is still another object of the present invention to provide a liquid crystal display device manufactured by using the above composition.

According to a first aspect, the present invention provides a silicon-containing compound selected from: 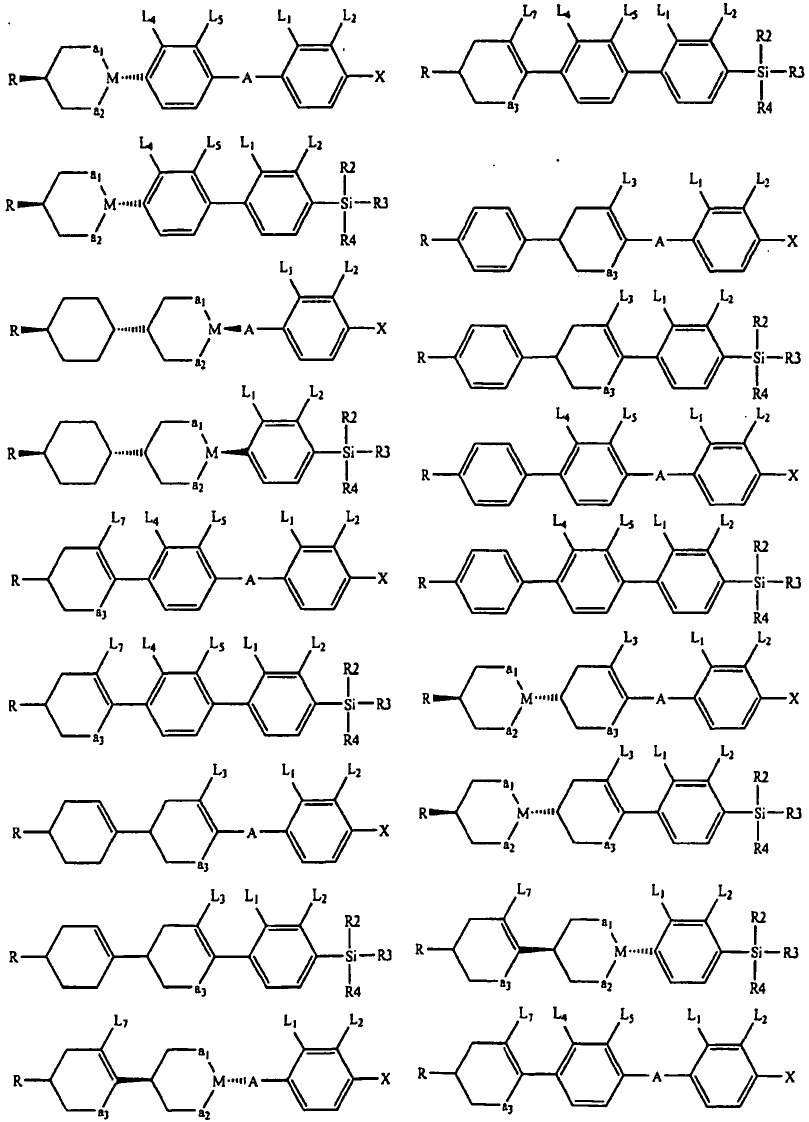 wherein A is SiOₖ₁(CQ₂)ₙ₁, Si(CQ₂)ₙ₁Oₖ₁, (CQ₂)ₙ₁Oₖ₁Si, (CQ₂) ₙ₁SiOₖ₁, Oₖ₁(CQ₂)ₙ₁Si or Oₖ₁Si(CQ₂)ₙ₁, wherein k1 is 0 or 1, Q is H or F, and n1 is an integer between 0 and 3;
M is C, N or Si;
each of a₁, a₂ and a₃ is independently selected from C, NR and O;
R is a C₁-C₁₅ alkyl group, a C₂-C₁₅ alkene group or an alkoxy group (R₁O), wherein the alkene group is CH=CH₂, CH=CHCH₃ (E,Z), CH₂CH=CH₂, CH=CHCH₂CH₃ (E,Z), CH₂CH=CHCH₃ (E,Z), CH₂CH₂CH=CH₂, CH=CHCH₂CH₂CH₃ (E,Z), CH₂CH=CHCH₂CH₃ (E,Z), CH₂CH₂CH=CHCH₃ (E, Z) or CH₂CH₂CH₂CH=CH₂;
R₁ is H, a C₁-C₁₅ alkyl group or a C₂-C₁₅ alkene group, wherein the alkene group is CH=CH₂, CH=CHCH₃ (E,Z), CH₂CH=CH₂, CH=CHCH₂CH₃ (E,Z), CH₂CH=CHCH₃ (E,Z), CH₂CH₂CH=CH₂, CH=CHCH₂CH₂CH₃ (E,Z), CH₂CH=CHCH₂CH₃ (E,Z), CH₂CH₂CH=CHCH₃ (E,Z) or CH₂CH₂CH₂CH=CH₂;
X is H, SiR₂R₃R₄, CF₃, OCF₃, CN, NCS, a halogen atom or R;
each of R₂, R₃ and R₄ is independently selected from R and a halogen atom; and
each of L₁, L₂, L₃, L₄, L₅ and L₇ is independently selected from H, a halogen atom, CN, CF₃, OCF₃ and NCS.

According to a second aspect, the present invention provides a liquid crystal composition which comprises at least one silicon-containing compound in accordance with the above first aspect.

According to a third aspect, the present invention provides a liquid crystal display device which comprises a liquid crystal layer prepared from the liquid crystal composition according to the above second aspect.

According to a fourth aspect, the present invention provides a method for preparing a silicon-containing compound according to the above first aspect which is represented by the following reaction scheme: 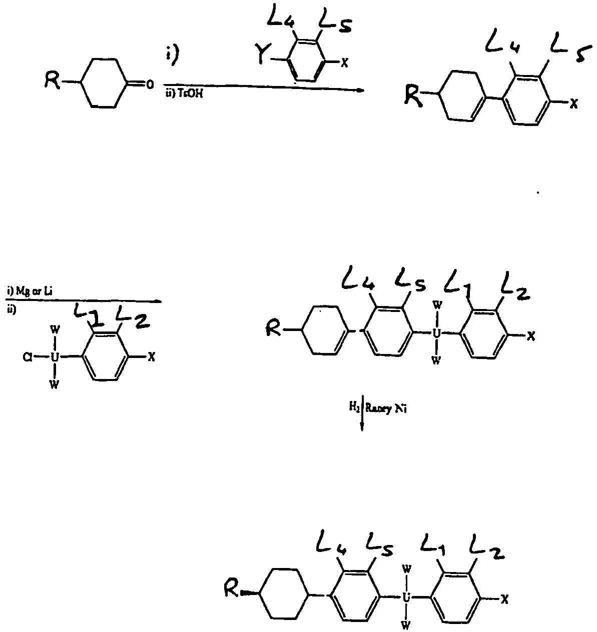 wherein U is SiOₖ₁(CQ₂)ₙ₁, Si(CQ₂)ₙ₁Oₖ₁, (CQ₂)ₙ₁Oₖ₁Si or (CQ₂)ₙ₁SiOₖ₁, wherein k1 is 0 or 1, Q is H or F, and n1 is an integer between 0 and 3;
W is Me, Et, F or Cl;
Y is Mg or Li; X is H, a halogen atom or SiV₃;
V is selected from H, Me, Et, F, Cl, OMe and OEt; and
R, L₁, L₂, L₄ and L₅ are the same in accordance with the above first aspect.

According to a fifth aspect, the present invention provides a method for preparing a silicon-containing compound according to the first aspect which is represented by the following reaction scheme: 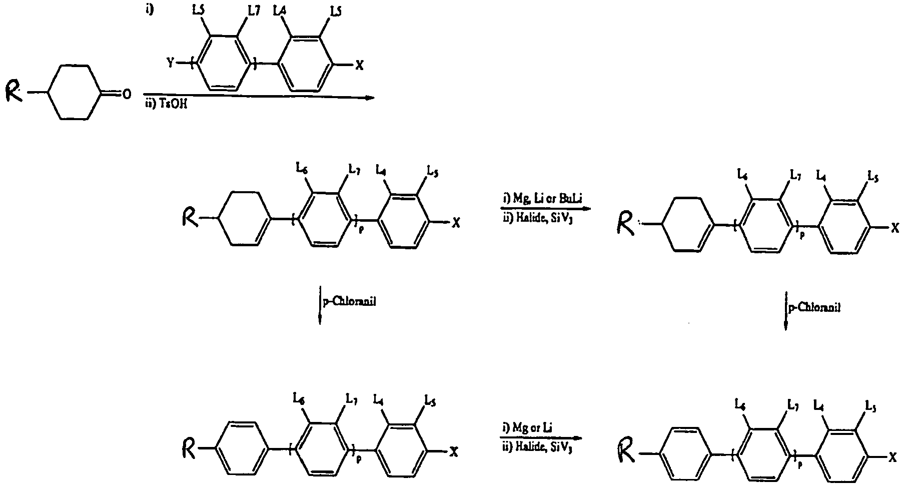 wherein V is selected from H, Me, Et, F, Cl, OMe and OEt;
p is an integer between 0 and 2;
Y is Mg or Li; X is H or a halogen atom;
L₆ is independently selected from H, a halogen atom, CN, CF₃, OCF₃ and NCS; and
R, L₄, Land L₇ are the same in accordance with the above first aspect.

According to a sixth aspect, the present invention provides a method for preparing a silicon-containing compound according to the first aspect which is represented by the following reaction scheme: 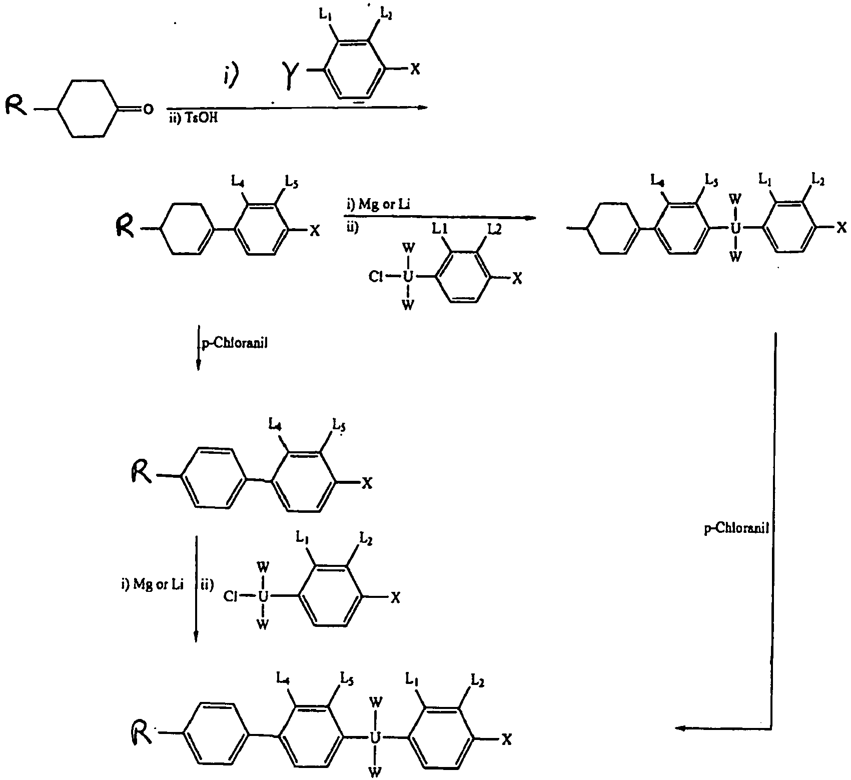 wherein U is SiOₖ₁ (CQ₂)ₙ₁, Si(CQ₂)ₙ₁Oₖ₁, (CQ₂)ₙ₁Oₖ₁Si or (CQ₂)ₙ₁SiOₖ₁, wherein k1 is 0 or 1, Q is H or F, and n1 is an integer between 0 and 3;
W is Me, Et, F or Cl;
Y is Mg or Li; X is H, halide or SiV₃;
V is selected from H, Me, Et, F, Cl, OMe and OEt; and
R, L₁, L₂, L₄ and L₅ are the same as defined in the above first aspect.

Hereinafter, the present invention will be explained in more detail.

The present invention provides a novel silicon-containing compound that may be applied in various display devices, a liquid crystal composition essentially comprising the silicon-containing compound, preferably a negative nematic liquid crystal composition, and a liquid crystal display device using the above liquid crystal composition. The silicon-containing compound is characterized by having low viscosity, and high negative (-) dielectric anisotropy.

High dielectric anisotropy is required for the operation of a liquid crystal under a low driving voltage. According to the present invention, the liquid crystal compound has dissymmetry of substituents based on the major axis of the molecule, thereby providing high negative dielectric anisotropy.

Low viscosity is required to obtain a fast response time of a liquid crystal. According to the compound of the present invention, it is possible to obtain low viscosity by introducing a silicon-containing substituent into at least one of the linking groups (A and E) and terminal group (X), or both of the linking groups and terminal group.

Further, according to the present invention, it is possible to improve dipole moment by introducing a halogen atom and/or alkyl group as a substituent for the hydrogen atom, which forms a primary bond with silicon when a silicon-containing substituent is introduced into at least one of the linking groups and/or terminal group. Such improved dipole moment results in improvement in the dielectric anisotropy, which is affected significantly by the polarizability and dipole moment.

Stereoisomers of the above silicon-containing compound are also included in the scope of the present invention. Herein, the silicon-containing compound having stereoisomers is present preferably in the trans-form with liquid crystal characteristics. Additionally, stereoisomers of the silicon-containing compound may be present in the ratio of transisomer:cis-isomer of 85∼100:15∼0, but are not limited thereto.

The above silicon-containing compound is chemically and thermally stable, is stable to light, and can form a mesomorphic phase (mesophase) at a desired temperature range so as to be used suitably for display applications.

The silicon-containing compound represented by formula 1 according to the present invention may be prepared by a method generally known to one skilled in the art. According to a preferred embodiment of the present invention, the silicon-containing compound represented by formula 1 may be prepared by way of the following Reaction Schemes 1∼3. 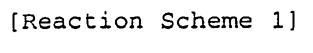 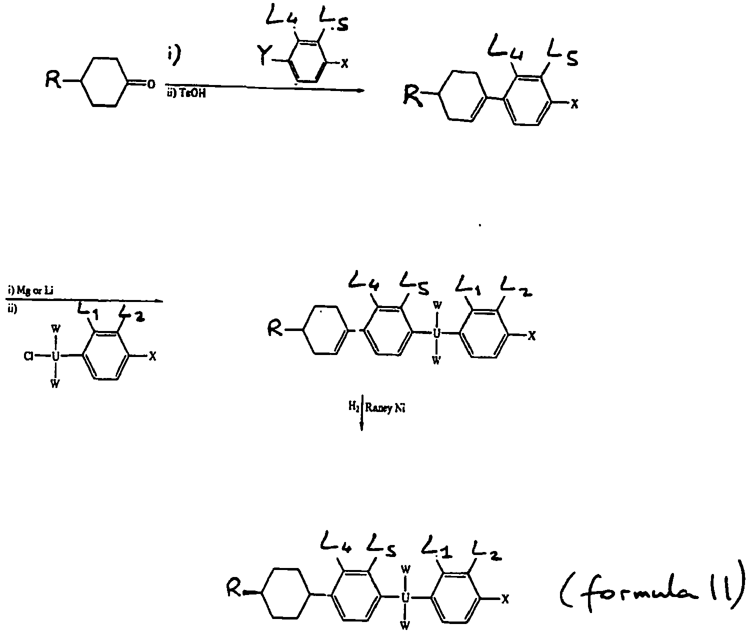 wherein U is SiOₖ₁(CQ₂)ₙ₁, Si(CQ₂)ₙ₁Oₖ₁, (CQ₂)ₙ₁Oₖ₁Si or (CQ₂) ₙ₁SiOₖ₁, wherein k1 is 0 or 1, Q is H or F, and n1 is an integer between 0 and 3;
W is Me, Et, F or Cl;
Y is Mg or Li; X is H, a halogen atom or SiV₃;
V is selected from H, Me, Et, F, Cl, OMe and OEt; and
R, L1, L₂, L₄ and L₅ are the same in accordance with the above first aspect.

In one embodiment of the method represented by Reaction Scheme 1, 4-n-propylcyclohexanone is subjected to the Grignard reaction, followed by dehydration using TsOH. The resultant product is allowed to react with n-BuLi to form an anion, which in turn is allowed to react with a silyl chloride derivative. Next, hydrogenation is performed by using the Raney-Nickel catalyst in order to form a trans isomer, thereby providing a silyl liquid crystal compound represented by formula 11, in which ring B or ring C is 1,4-cyclohexyl. Otherwise, the trans isomer may be formed by way of hydrogenation using Pd/charcoal and recrystallization. 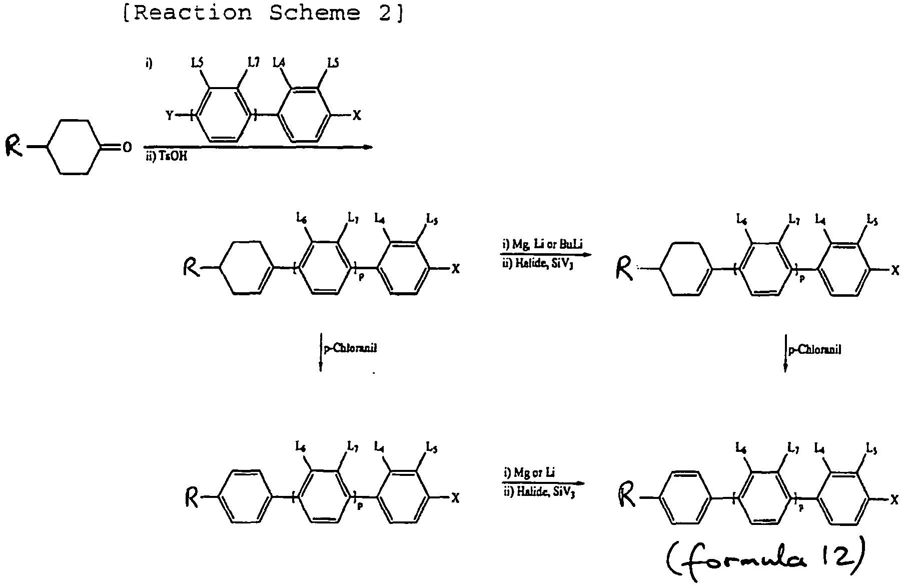 wherein V is selected from H, Me, Et, F, Cl, OMe and OEt;
p is an integer between 0 and 2;
Y is Mg or Li; X is H or a halogen atom;
L₆ is independently selected from H, a halogen atom, CN, CF₃ , OCF₃ and NCS; and
R, L₄, L₅ and L₇ are the same in accordance with the above first aspect.

In one embodiment of the method represented by Reaction Scheme 2, 4-n-propylcyclohexanone is subjected to the Grignard reaction, followed by dehydration using TsOH. Then, the resultant product is converted into an anionic form by using n-BuLi, and then is allowed to react with the silyl chloride derivative. If the reaction with p-chloranil is used instead of hydrogenation, the silyl liquid crystal compound represented by formula 12, in which ring B or ring C is 1,4-phenyl, can be obtained. 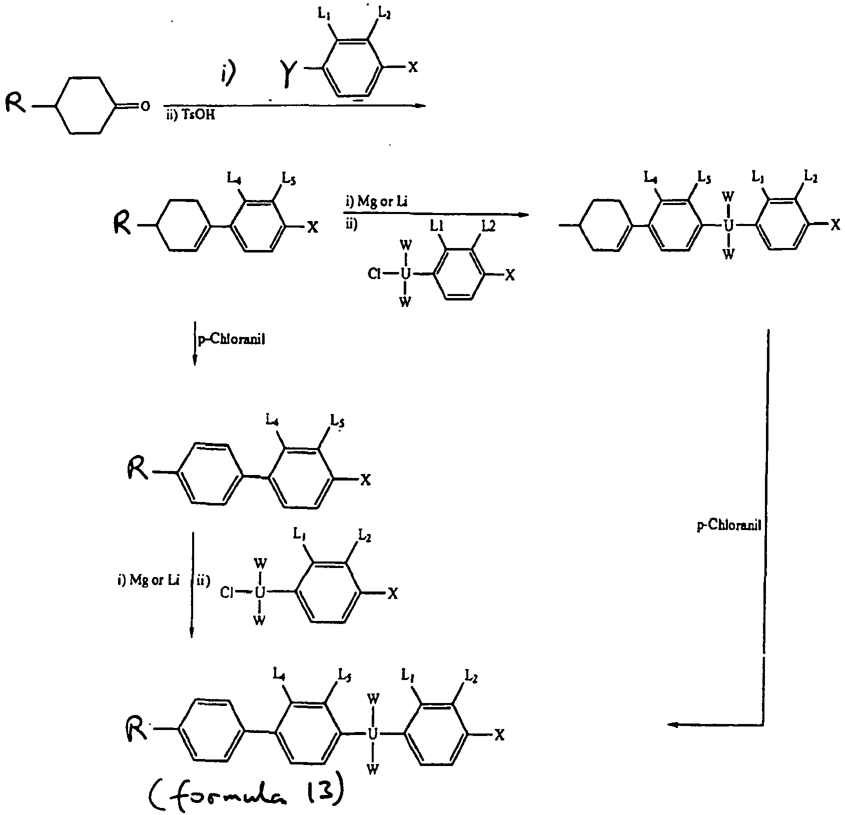 wherein U is SiOₖ₁(CQ₂)ₙ₁, Si(CQ₂)ₙ₁Oₖ₁, (CQ₂) ₙ₁Oₓ₁Si or (CQ₂)ₙ₁SiOₖ₁, wherein k1 is 0 or 1, Q is H or F, and n1 is an integer between 0 and 3;
W is Me, Et, F or Cl;
Y is Mg or Li; X is H, halide or SiV₃;
V is selected from H, Me, Et, F, Cl, OMe and OEt; and
R, L₁, L₂, L₄ and L₅ are the same as defined in the above first aspect.

In one embodiment of the method represented by Reaction Scheme 3, 4-n-propylcyclohexanone is subjected to the Grignard reaction, followed by dehydration using TsOH. Next, the resultant product is converted into its anionic form by using n-BuLi, and then is allowed to react with the silyl chloride derivative. If the reaction with p-chloranil is used instead of hydrogenation, the silyl liquid crystal compound represented by formula 13, in which ring B or ring C is 1,4-phenol, can be obtained.

In addition to the compounds obtained by way of the above Reaction Schemes 1∼3, compounds obtained by similar methods or conventional methods known to one skilled in the art are also included in the scope of the present invention. The silicon-containing compounds obtained as described above may be mixed in an adequate ratio to provide a liquid crystal composition.

The present invention provides a liquid crystal composition, preferably a nematic liquid crystal composition, which comprises the silicon-containing compound according to the above first aspect of the invention.

To provide the desired liquid crystal characteristics by a liquid crystal composition, about 5∼20 components are generally used in combination in the liquid crystal composition. According to the present invention, it is possible to provide a liquid crystal composition having a low driving voltage and a fast response time by using the novel silicon-containing compound according to the above first aspect of the invention, which can serve to impart high negative dielectric anisotropy as well as to reduce viscosity.

Although there is no particular limitation in the content of the silicon containing compound each compound is preferably used in an amount of 1∼50 wt% based on 100 wt% of the total liquid crystal composition.

The liquid crystal composition according to the present invention may further comprise other liquid crystal compounds, currently used in a conventional liquid crystal composition, in addition to the above silicon-containing compound. Such compounds may be used in a controlled ratio, as necessary. Additionally, suitable additives may also be used, and such additives are disclosed in [H. Kelker/R. Hatz, Handbook of Liquid Crystals, Verlag Chemie, Weinheim, 1980]. For example, additives for modifying the dielectric anisotropy, viscosity and/or alignment of a nematic phase may be used. Particular examples of the additives that may be used in the liquid crystal composition according to the present invention include chiral dopants that inhibit the helical structure and reverse distortion of a liquid crystal, dichroic dyes, or the like.

The liquid crystal composition according to the present invention may be prepared by a method generally known to one skilled in the art. In one embodiment of such methods, various components that form the liquid crystal composition are dissolved at a temperature ranging from room temperature to a high temperature.

Also, the present invention provides a liquid display device, which comprises a liquid crystal layer obtained from the liquid crystal composition. introduced into a liquid crystal device. The liquid crystal phase, dissolved as mentioned above, may be modified so that it can be applied for all types of liquid crystal display devices by virtue of the use of suitable additives.

### Best Mode for Carrying Out the Invention

Reference will now be made in detail to the preferred embodiments of the present invention. It is to be understood that the following examples are illustrative only and the present invention is not limited thereto.

### [Examples 1∼17]

### Example 1

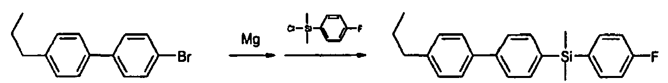

First, 25 ml of dichlorodimetylsilane was added to 50 ml of dry THF, and 100 ml of 1.0M 4-fluorophenylmagnesium bromide was added very slowly dropwise thereto. After the completion of the addition, the reaction mixture was stirred at low temperature for about 3 hours. Next, an excessive amount of hexane was added to the reaction mixture in order to precipitate a magnesium salt. The magnesium salt was removed via filtration and the organic solvent was evaporated completely under reduced pressure. Then, chlorodimethyl(4-fluorophenyl)silane was separated off via vacuum distillation (70∼75C/8mPa). In a separate container, 255 mg of Mg was dissolved in 10 ml of dry THF. Next, a solution containing 2.88g of 4-bromo-4'-n-propylbiphenyl dissolved in 20 ml of dry THF was added thereto to form a Grignard reagent, to which 1.97 g of chlorodimethyl(4-fluorophenyl)silane was added at room temperature. After stirring for about 10 hours, the reaction mixture was worked up with water and hexane, and then purified by silica gel column chromatography to obtain the silicon-containing compound represented by the above formula (yield: 88%). 400MHz ¹H-NMR, CDCl₃, δ (ppm) : 0.57 (s, 6H), 0.99 (t, 3H), 1.65∼1.69 (m, 2H), 2.64 (t, 2H), 7.07 (t, 2H), 7.25 (d, 2H), 7.54 (d, 2H), 7.58∼7.61 (m, 6H).

### Example 2

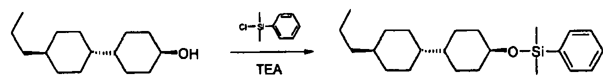

First, 2.0 g of trans, trans-cyclohexanol was dissolved in 20 ml of CH₂Cl₂, and 1.7 g of chlorodimethylphenylsilane and 1.08 g of triethylamine was added thereto at room temperature. After stirred for about 10 hours, the reaction mixture was worked up with water and CH₂Cl₂, and then purified by silica gel column chromatography to obtain the silicon-containing compound represented by the above formula (yield: 78%). 400MHz ¹H-NMR, CDCl₃, δ(ppm) : 0.38 (s, 6H), 0.86~0.90 (m, 2H), 0.91 (t, 3H), 0.93~1.09 (m, 6H), 1.09~1.20 (m, 3H), 1.25~1.38 (m, 4H), 1.63~1.71 (br, 4H), 1.71~1.76 (br, 2H), 1.81~1.90 (br, 2H), 3.51 (m, 1H), 7.36~7.40 (m, 3H), 7.59~7.62 (m, 2H).

### Example 3

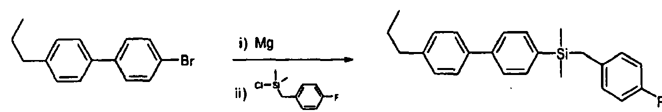

First, 6.45 g of dichlorodimethylsilane was dissolved in dry THF and cooled to 0°C . Next, 100 ml of 4-fluorobenzylmagnesium chloride (0.25M) was , slowly added dropwise thereto. After the completion of the addition, the reaction mixture was allowed to further react at low temperature for about 3 hours. Next, an excessive amount of hexane was added to the reaction mixture to precipitate a magnesium salt. The magnesium salt was removed via filtration and the organic solvent was evaporated under reduced pressure. By doing so, chlorodimethyl(4-fluorophenyl)silane was obtained with a yield of 80% via vacuum distillation. In a separate container, 3.0 g of 4-bromo-4'-n-propylbiphenyl and 250 mg of Mg was added to 20 ml of dry THF to provide a Grignard reagent, to which 2.3 g of chlorodimethyl(4-fluorophenyl)silane was added at room temperature. The reaction mixture was heated to 60°C for about 10 hours, and worked up with water and hexane, and then purified by silica gel column chromatography to obtain the silicon-containing compound represented by the above formula (yield: 91%). 400MHz ¹H-NMR, CDCl₃, δ(ppm) : 0.30 (s, 6H), 0.99 (t, 3H), 1.65~1.74 (m, 2H), 2.30 (s, 2H), 2.65 (t, 2H), 6.89 (d, 4H), 7.26-7.28 (m, 2H), 7.50 (d, 2H), 7.54 (d, 2H), 7.58 (d, 2H).

### Example 4

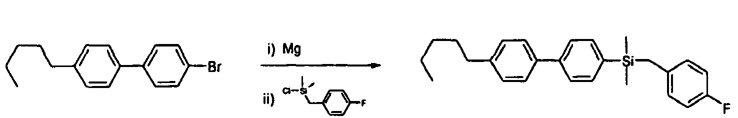

First, 3.03 g of 4-bromo-4'-n-pentylbiphenyl and 245 mg of Mg was introduced into 20 ml of dry THF to form a Grignard reagent, and then 2.05 g of chlorodimethyl(4-fluorobenzyl)silane was added thereto. The reaction mixture was heated to 60°C for about 10 hours, and worked up with water and hexane, and then purified by silica gel column chromatography to obtain the silicon-containing compound represented by the above formula (yield: 94%). 400MHz ¹H-NMR, CDCl₃, δ(ppm) : 0.31 (s, 6H), 0.91~0.97 (m, 3H), 1.36~1.45 (m, 4H), 1.65~1.77 (m, 2H), 2.33 (s, 2H), 2.69 (t, 2H), 6.91 (d, 4H), 7.27~7.32 (m, 2H), 7.53 (d, 2H), 7.56 (d, 2H), 7.61 (d, 2H).

### Example 5

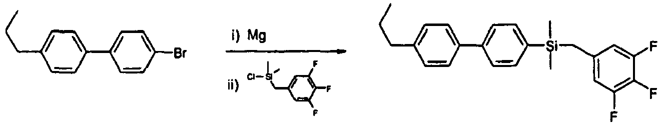

First, 6.45 g of dichlorodimethylsilane was dissolved in dry THF and cooled to 0°C. Next, 25 mmol of 3,4,5-trifluorobenzylmagnesium chloride was added slowly dropwise thereto. After the completion of the addition, the reaction mixture was allowed to further react at low temperature for about 3 hours. Next, an excessive amount of hexane was added to the reaction mixture to precipitate a magnesium salt. The magnesium salt was removed via filtration and the organic solvent was evaporated under reduced pressure. By doing so, chlorodimethyl(3,4,5-trifluorobenzylsilane) was obtained with a yield of 75% via vacuum distillation. In a separate container, 2.75 g of 4-bromo-4'-n-propylbiphenyl and 245 mg of Mg was added to 20 ml of dry THF to provide a Grignard reagent, to which 2.4 g of chlorodimethyl(3,4,5-trifluorobenzyl)silane was added at room temperature. The reaction mixture was heated to 60°C for about 10 hours, and worked up with water and hexane, and then purified by silica gel column chromatography to obtain the silicon-containing compound represented by the above formula (yield: 87%) . 400MHz ¹H-NMR, CDCl₃, δ (ppm) : 0.31 (s, 6H), 0.99 (t, 3H), 1.63~1.76 (m, 2H), 2.26 (s, 2H), 2.64 (t, 2H), 6.46~6.54 (m, 2H), 7.26 (d, 2H), 7.48 (d, 2H), 7.53 (d, 2H), 7.59 (d, 2H).

### Example 6

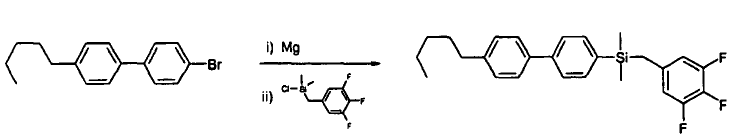

First, 3.03 g of 4-bromo-4'-n-pentylbiphenyl and 245 mg of Mg was introduced into 20 ml of dry THF to form a Grignard reagent, and then 2.4 g of chlorodimethyl(3,4,5-trifluorobenzyl)silane was added thereto. The reaction mixture was heated to 60°C for about 10 hours, and worked up with water and hexane, and then purified by silica gel column chromatography to obtain the silicon-containing compound represented by the above formula (yield: 85%). 400MHz ¹H-NMR, CDCl₃, δ(ppm) : 0.35 (s, 6H), 0.93∼0.98 (m, 3H), 1.33~1.48 (m, 4H), 1.65~1.77 (m, 2H), 2.29 (s, 2H), 2.68 (t, 2H), 6.50~6.59 (m, 2H), 7.32 (d, 2H), 7.52 (d, 2H), 7.58 (d, 2H), 7.63 (d, 2H).

### Example 7

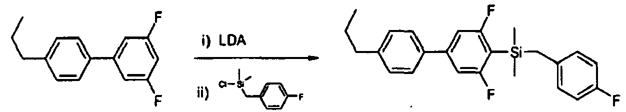

First, 2.32 g of 3,5-difluoro-4'-n-propylbiphenyl was added to 20 ml of dry THF, and 5 ml of 2.0M LDA was added dropwise thereto at -78°C. The reaction mixture was allowed to react sufficiently at low temperature for about 3 hours to form an anion. Next, 2.05 g of chlorodimethyl(4-fluorobenzyl)silane was added thereto, and the reaction mixture was warmed gradually to room temperature. After stirred at room temperature for about 1 hour, the reaction mixture was worked up with water and hexane, and then purified by silica gel column chromatography to obtain the silicon-containing compound represented by the above formula (yield: 90%). 400MHz ¹H-NMR, CDCl₃, δ (ppm) : 0.35 (s, 6H), 0.98 (t, 3H), 1.64~1.74 (m, 2H), 2.43 (s, 2H), 2.65 (t, 2H), 6.87~6.97 (m, 4H), 7.05 (d, 2H), 7.28 (d, 2H), 7.50 (d, 2H).

### Example 8

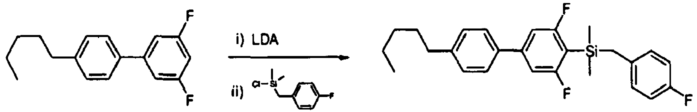

First, 2.60 g of 3,5-difluoro-4'-n-pentylbiphenyl was added to 20 ml of dry THF, and 5 ml of 2.0M LDA was added dropwise thereto at -78°C. The reaction mixture was allowed to react sufficiently at low temperature for about 3 hours to form an anion. Next, 2.05 g of chlorodimethyl(4-fluorobenzyl)silane were added thereto, and the reaction mixture was warmed gradually to room temperature. After stirred at room temperature for about 1 hour, the reaction mixture was worked up with water and hexane, and then purified by silica gel column chromatography to obtain the silicon-containing compound represented by the above formula (yield: 85%). 400MHz ¹H-NMR, CDCl₃, δ(ppm) : 0.35 (s, 6H), 0.91~0.93 (m, 3H), 1.31~1.43 (m, 4H), 1.60~1.73 (m, 2H), 2.42 (s, 2H), 2.65 (t, 2H), 6.86~6.98 (m, 4H), 7.05 (d, 2H), 7.28 (d, 2H), 7.49 (d, 2H).

### Example 9

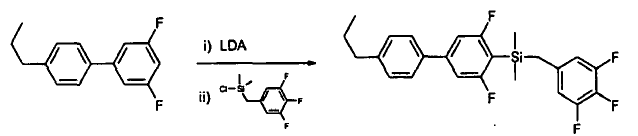

First, 2.32 g of 3,5-difluoro-4'-n-propylbiphenyl was added to 20 ml of dry THF, and 5 ml of 2.0M LDA was added dropwise thereto at -78°C. The reaction mixture was allowed to react sufficiently at low temperature for about 3 hours to form an anion. Next, 2.4 g of chlorodimethyl(3,4,5-trifluorobenzyl)silane were added thereto, and the reaction mixture was warmed gradually to room temperature. After stirred at room temperature for about 1 hour, the reaction mixture was worked up with water and hexane, and then purified by silica gel column chromatography to obtain the silicon-containing compound represented by the above formula (yield: 84%). 400MHz ¹H-NMR, CDCl₃, δ(ppm) : 0.44 (s, 6H), 1.04 (t, 3H), 1.69~1.79 (m, 2H), 2.45 (s, 2H), 2.70 (t, 2H), 6.60~6.68 (m, 2H), 7.11 (d, 2H), 7.34 (d, 2H), 7.55 (d, 2H).

### Example 10

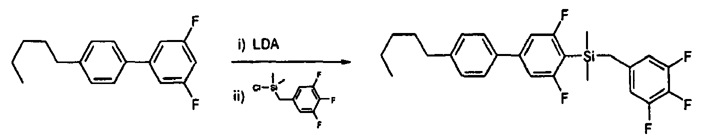

First, 2.6 g of 3,5-difluoro-4'-n-pentylbiphenyl was added to 20 ml of dry THF, and 5 ml of 2.0M LDA was added dropwise thereto at -78°C. The reaction mixture was allowed to react sufficiently at low temperature for about 3 hours to form an anion. Next, 2.4 g of chlorodimethyl(3,4,5-trifluorobenzyl)silane was added thereto, and the reaction mixture was warmed gradually to room temperature. After stirred at room temperature for about 1 hour, the reaction mixture was worked up with water and hexane, and then purified by silica gel column chromatography to obtain the silicon-containing compound represented by the above formula (yield: 80%). 400MHz ¹H-NMR, CDCl₃, δ(ppm) : 0.40 (s, 6H), 0.85~0.96 (m, 3H), 1.31~1.42 (m, 4H), 1.61 ∼1.72 (m, 2H), 2.40 (s, 2H), 2.64 (t, 2H), 6.55~6.62 (m, 2H), 7.05 (d, 2H), 7.28 (d, 2H), 7.49 (d, 2H).

### Example 11

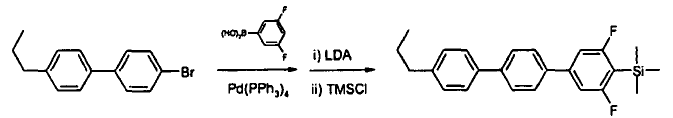

First, 3.0 g of 4-bromo-4'-n-propylbiphenyl was dissolved into 27 ml of DME as a solvent. Next, 2.05 g of 3,5-difluorophenylboronic acid, 380 mg of Pd(PPh₃)₄ and 27 ml of 2.0M Na₂CO₃ was added thereto. After refluxed at 100°C for about 10 hours, the reaction mixture was worked up with water and hexane, and purified by silica gel column chromatography to obtain the triphenyl compound with a yield of 95%. Then, 3.0 g of the triphenyl compound was dissolved into 20 ml of dry THF and 5 ml of 2.0M LDA was slowly added dropwise thereto at -78°C. After an anion was formed over about 3 hours, 1.3 g of trimethylsilyl chloride was added to the anion at low temperature and the reaction mixture was warmed gradually to room temperature. After stirred at room temperature for about 1 hour, the reaction mixture was worked up with water and hexane, and then recrystallized from hexane/MeOH solvent to obtain the silicon-containing compound represented by the above formula (yield: 95%). 400MHz ¹H-NMR, CDCl₃, δ(ppm) : 0.41 (s, 9H), 0.99 (t, 3H), 1.66~1.75 (m, 2H), 2.65 (t, 2H), 7.09 (d, 2H), 7.28 (d, 2H), 7.56 (d, 2H), 7.63 (d, 2H), 7.68 (d, 2H).

### Example 12

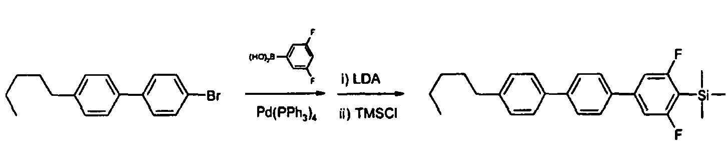

First, 3.3 g of 4-bromo-4'-n-pentylbiphenyl was dissolved into 27 ml of DME as a solvent. Next, 2.05 g of 3,5-difluorophenylboronic acid, 380 mg of Pd(PPh₃)₄ and 27 ml of 2.0M Na₂CO₃ was added thereto. After refluxed at 100°C for about 10 hours, the reaction mixture was worked up with water and hexane, and then purified by silica gel column chromatography to obtain the triphenyl compound with a yield of 90%. Then, 3.0 g of the triphenyl compound was dissolved into 20 ml of dry THF and 4.5 ml of 2.0M LDA was slowly added dropwise thereto at -78°C. After an anion was formed over about 3 hours, 1.16 g of trimethylsilyl chloride was added to the anion at low temperature and the reaction mixture was warmed to room temperature. After stirred at room temperature for about 1 hour, the reaction mixture was worked up with water and hexane, and then recrystallized from hexane/MeOH solvent to obtain the silicon-containing compound represented by the above formula (yield: 92%). 400MHz ¹H-NMR, CDCl₃, δ(ppm) : 0.41 (s, 9H), 0.87~0.95 (m, 3H), 1.31~1.42 (m, 4H), 1.63~1.72 (m, 2H), 2.67 (t, 2H), 7.09 (d, 2H), 7.28 (d, 2H), 7.56 (d, 2H), 7.63 (d, 2H), 7.68 (d, 2H).

### Example 13

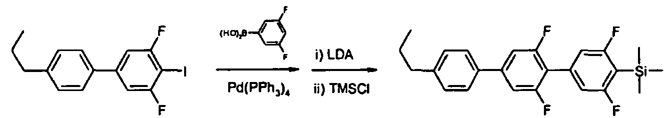

First, 3.9 g of 3,5-difluoro-4-iodo-4'-n-propylbiphenyl was dissolved into 27 ml of DME as a solvent. Next, 2.05 g of 3,5-difluorophenylboronic acid, 380 mg of Pd(PPh₃)₄ and 27 ml of 2.0M Na₂CO₃ was added thereto. After refluxed at 100°C for about 10 hours, the reaction mixture was worked up with water and hexane, and then purified by silica gel column chromatography to obtain the triphenyl compound with a yield of 98%. Then, 3.4 g of the triphenyl compound was dissolved into 20 ml of dry THF and 5 ml of 2.0M LDA was slowly added dropwise thereto at -78°C. After an anion was formed over about 3 hours, 1.2 g of trimethylsilyl chloride was added to the anion at low temperature and the reaction mixture was warmed gradually to room temperature. After stirred at room temperature for about 1 hour, the reaction mixture was worked up with water and hexane, and then recrystallized from hexane/MeOH solvent to obtain the silicon-containing compound represented by the above formula (yield: 96%) . 400MHz ¹H-NMR, CDCl₃, δ(ppm) : 0.42 (s, 9H), 0.99 (t, 3H), 1.65~1.75 (m, 2H), 2.66 (t, 2H), 7.00 (d, 2H), 7.23 (d, 2H), 7.30 (d, 2H), 7.52 (d, 2H).

### Example 14

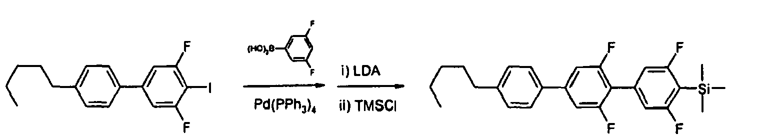

First, 4.2 g of 3,5-difluoro-4-iodo-4'-n-pentylbiphenyl was dissolved into 27 ml of DME as a solvent. Next, 2.05 g of 3,5-difluorophenylboronic acid, 380 mg of Pd(PPh₃)₄ and 27 ml of 2.0M Na₂CO₃ was added thereto. After refluxed at 100°C for about 10 hours, the reaction mixture was worked up with water and hexane, and then purified by silica gel column chromatography to obtain the triphenyl compound with a yield of 93%. Then, 3.7 g of the triphenyl compound was dissolved into 20 ml of dry THF and 5 ml of 2.0M LDA was added slowly dropwise thereto at -78°C. After an anion was formed over about 3 hours, 1.19 g of trimethylsilyl chloride was added to the anion at low temperature and the reaction mixture was warmed to room temperature. After stirred at room temperature for about 1 hour, the reaction mixture was worked up with water and hexane, and then recrystallized from hexane/MeOH solvent to obtain the silicon-containing compound represented by the above formula (yield: 92%). 400MHz ¹H-NMR, CDCl₃, δ(ppm) : 0.42 (s, 9H), 0.85~0.94 (m, 3H), 1.33~1.41 (m, 4H), 1.62~1.70 (m, 2H), 2.67 (t, 2H), 6.99 (d, 2H), 7.22 (d; 2H), 7.29 (d, 2H), 7.51 (d, 2H).

### Example 15. Liquid Crystal Composition (1)

A liquid crystal composition was prepared from the materials as shown in the following Table 1. In Table 1, each percent ratio refers to parts by weight per hundred parts of composition.

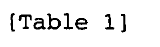

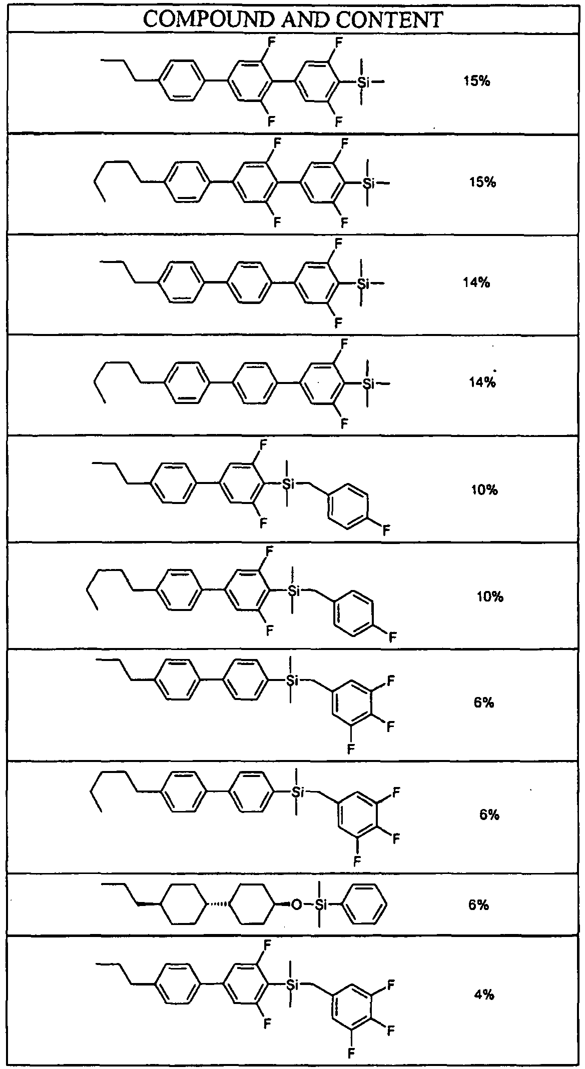

### Example 16. Liquid Crystal Composition (2)

A liquid crystal composition was prepared from the materials as shown in the following Table 2. In Table 2, each percent ratio refers to parts by weight per hundred parts of composition.

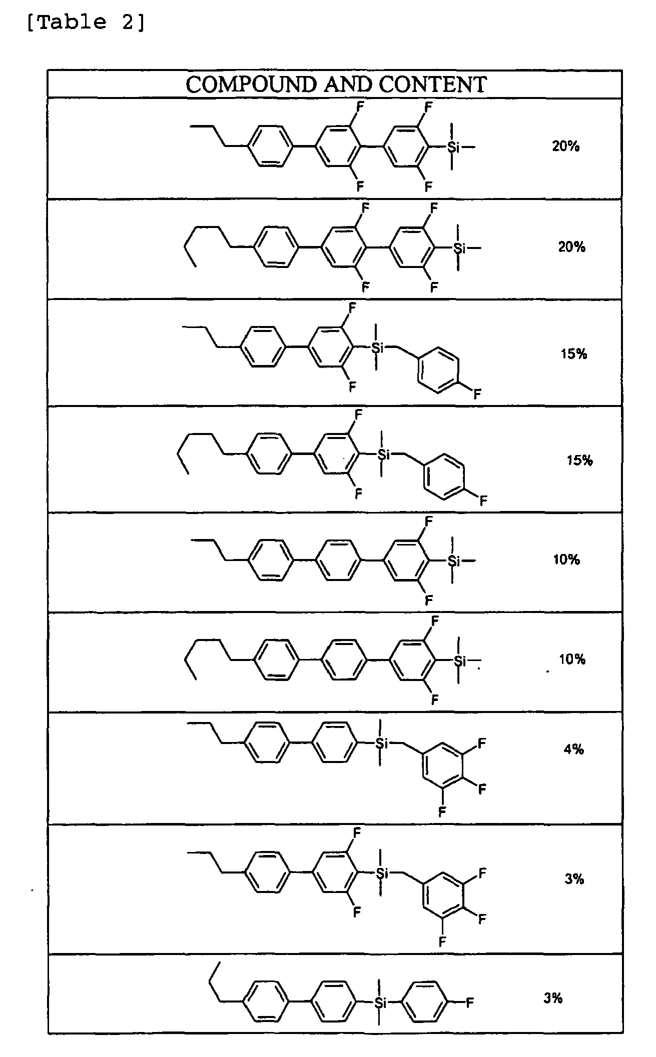

### Example 17. Liquid Crystal Composition (3)

A liquid crystal composition was prepared from the materials as shown in the following Table 3. In Table 3, each percent ratio refers to parts by weight per hundred parts of composition.

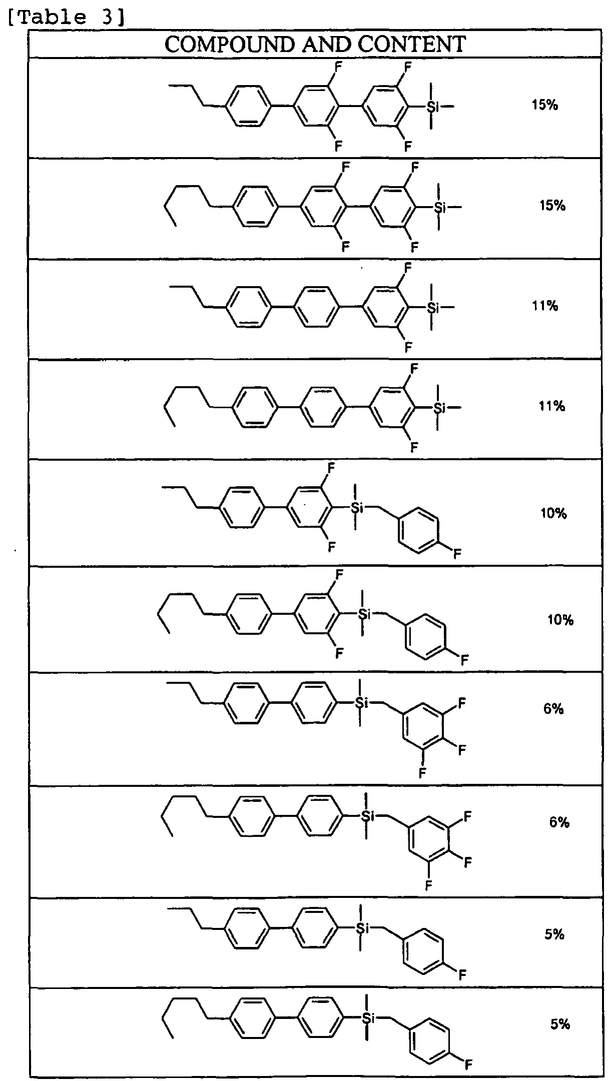

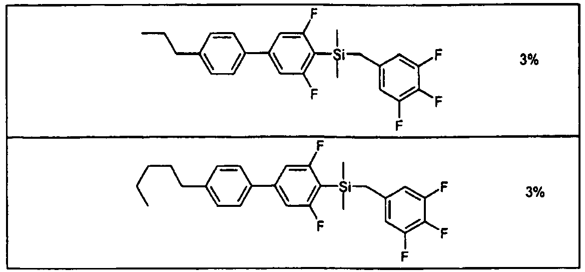

### Experimental Example 1. Evaluation for Physical Properties of Liquid Crystal Composition

The liquid crystal compositions according to the present invention were evaluated for their physical properties according to the following test.

The liquid crystal compositions according to Examples 15-17 were used. Each composition was introduced into a test tube in an amount of 1 g under the nitrogen atmosphere, and then heated at 150°C for 2 hours to measure the phase transition temperature. Herein, clearing point (c.p.) of each composition refers to the isotropic liquid phase transition temperature in a nematic phase. Additionally, optical anisotropy (Δn) of each composition was measured at 20°C/589 nm, while dielectric anisotropy (Δε) > of each composition was measured at 20°C/1 kHz. Also, viscosity of each composition was measured at 20°C. The results are shown in the following Table 4.

After the test, it can be seen that the liquid crystal compositions according to Examples 15∼17 that comprise, as an active component, the novel silicon-containing compound represented by formula 1 according to the present invention, show high positive (+) dielectric anisotropy and low viscosity (see Table 4).

**[Table 4]**

| Ex. | Clearing point (°C) | optical anisotropy | Dielectric anisotropy | Viscosity (mPas) |
|---|---|---|---|---|
| 15 | 88 | 0.107 | 11.1 | 118 |

invention, it is possible to provide a liquid crystal display device that satisfies various desired characteristics, including a fast response time and a low driving voltage.

## Claims

1. A silicon-containing compound selected from: 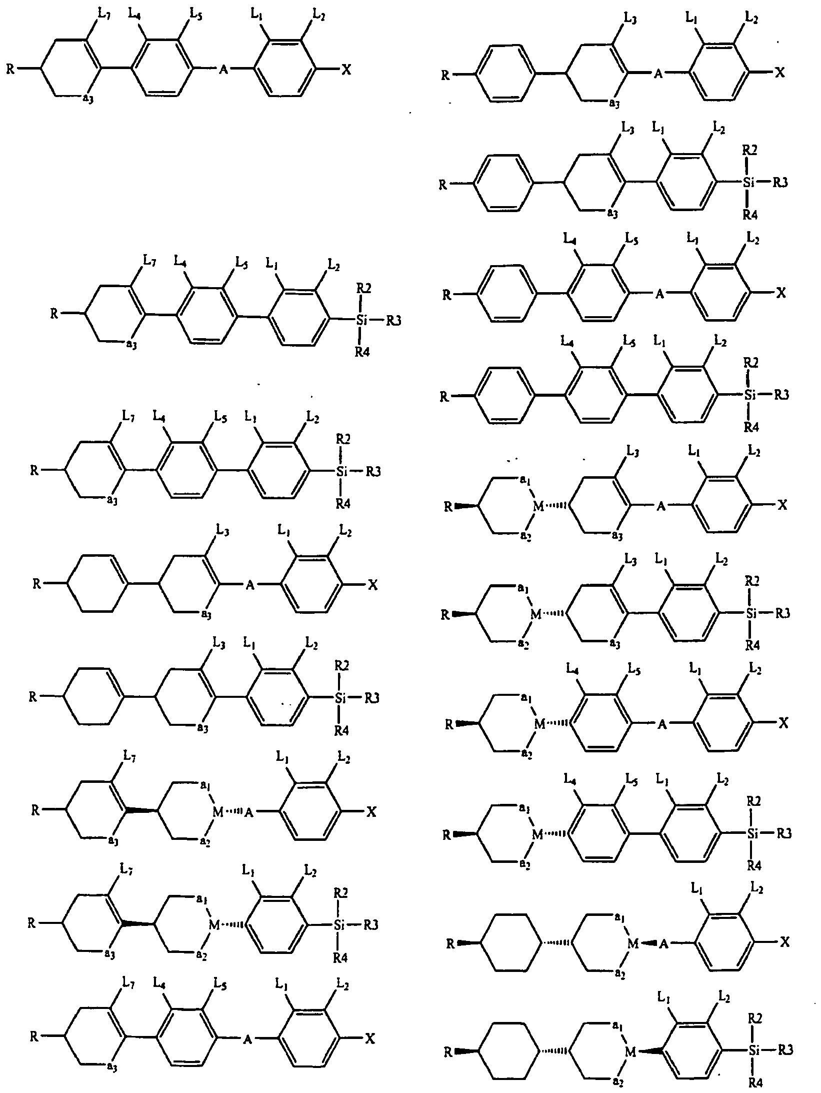 wherein A is SiOₖ₁(CQ₂)ₙ₁, Si(CQ₂)ₙ₁Oₖ₁, (CQ₂)ₙ₁Oₖ₁Si, (CQ₂)ₙ₁SiOₖ₁, Oₖ₁(CQ₂)ₙ₁Si or Oₖ₁Si(CQ₂)ₙ₁, wherein k1 is 0 or 1, Q is H or F, and n1 is an integer between 0 and 3;
M is C, N or Si;
each of a₁, a₂ and a₃ is independently selected from C, NR and O;
R is a C₁-C₁₅ alkyl group, a C₂-C₁₅ alkene group or an alkoxy group (R₁₀), wherein the alkene group is CH=CH₂, CH=CHCH₃ (E,Z), CH₂CH=CH₂, CH=CHCH₂CH₃ (E,Z), CH₂CH=CHCH₃ (E, Z), CH₂CH₂CH=CH₂, CH=CHCH₂CH₂CH₃ (E,Z), CH₂CH=CHCH₂CH₃ (E,Z), CH₂CH₂CH=CHCH₃ (E, Z) or CH₂CH₂CH₂CH=CH₂;
R₁ is H, a C₁-C₁₅ alkyl group or a C₂-C₁₅ alkene group, wherein the alkene group is CH=CH₂, CH=CHCH₃ (E,Z), CH₂CH=CH₂, CH=CHCH₂CH₃ (E,Z), CH₂CH=CHCH₃ (E,Z), CH₂CH₂CH=CH₂, CH=CHCH₂CH₂CH₃ (E,Z), CH₂CH=CHCH₂CH₃ (E,Z), CH₂CH₂CH=CHCH₃ (E,Z) or CH₂CH₂CH₂CH=CH₂;
X is H, SiR₂R₃R₄, CF₃, OCF₃, CN, NCS, a halogen atom or R;
each of R₂, R₃ and R₄ is independently selected from R and a halogen atom; and
each of L₁, L₂, L₃, L₄, L₅ and L₇ is independently selected from H, a halogen atom, CN, CF₃, OCF₃ and NCS.

2. A silicon-containing compound according to Claim 1, which has a negative dielectric anisotropy.

3. A silicon-containing compound according to Claim 1, which has stereoisomers.

4. A silicon-containing compound according to Claim 3, wherein the stereoisomers of the silicon-containing compound are present in a ratio of trans-isomer:cis-isomer of 85-100:15-0.

5. A liquid crystal composition, which comprises at least one silicon-containing compound as defined in any one of Claims 1 to 4.

6. A liquid crystal composition according to Claim 5, wherein each silicon-containing compound is present in an amount of 1-50 wt% based on 100 wt% of the total weight of the composition.

7. A liquid crystal display device which comprises a liquid crystal layer prepared from the liquid crystal composition as defined in Claim 5 or Claim 6.

8. A method for preparing a silicon-containing compound as claimed in Claim 1, which is represented by the following reaction scheme: 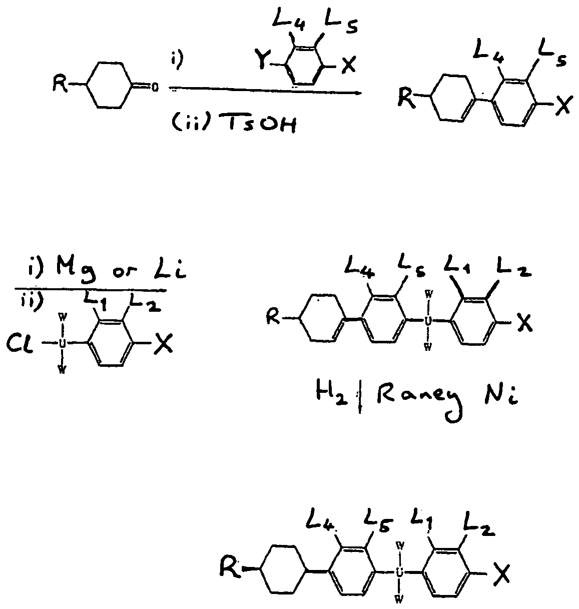 wherein U is SiOₖ₁(CQ₂)ₙ₁, Si(CQ₂)ₙ₁Oₖ₁, (CQ₂)ₙ₁Oₖ₁Si or (CQ₂)ₙ₁SiOₖ₁, wherein k1 is 0 or 1, Q is H or F, and nl is an integer between 0 and 3;
W is Me, Et, F or Cl;
Y is Mg or Li; X is H, a halogen atom or SiV₃;
V is selected from H, Me, Et, F, Cl, OMe and OEt; and
R, L₁, L₂, L₄ and L₅ are the same as defined in Claim 1.

9. A method for preparing a silicon-containing compound as claimed in Claim 1, which is represented by the following reaction scheme: 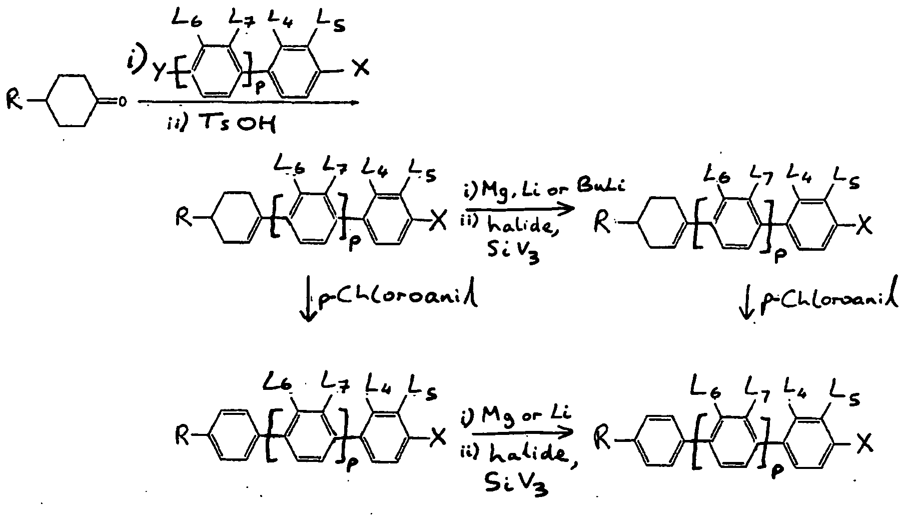 wherein V is selected from H, Me, Et, F, Cl, OMe and OEt;
p is an integer between 0 and 2;
Y is Mg or Li; X is H or a halogen atom;
L₆ is independently selected from H, a halogen atom, CN, CF₃, OCF₃ and NCS; and
R, L₄, L₅ and L₇, are the same as defined in Claim 1.

10. A method for preparing a silicon-containing compound as claimed in Claim 1, which is represented by the following reaction scheme: 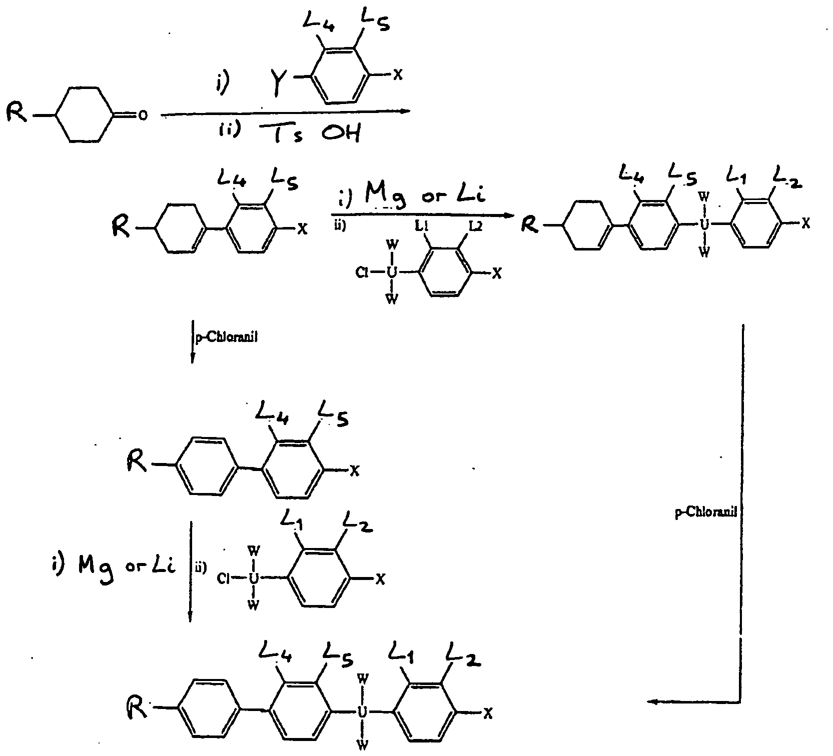 wherein U is SiOₖ₁(CQ₂)ₙ₁, Si(CQ₂)ₙ₁O_{k1,} (CQ₂)ₙ₁Oₖ₁Si or (CQ₂)ₙ₁SiOₖ₁, wherein k1 is 0 or 1, Q is H or F, and n1 is an integer between 0 and 3;
W is Me, Et, F or C1;
Y is Mg or Li; X is H, halide or SiV₃;
V is selected from H, Me, Et, F, Cl, OMe and OEt; and
R, L₁, L₂, L₄ and L₅ are the same as defined in Claim 1.

## Patentansprüche

1. Silizium enthaltende Verbindung ausgewählt aus: 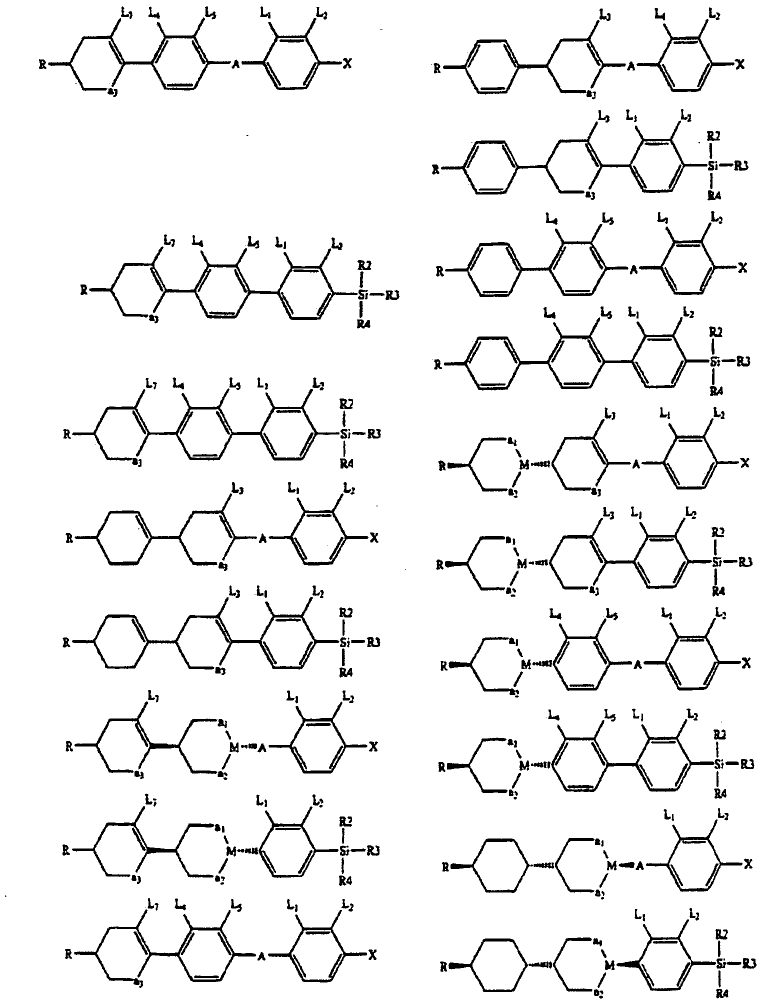 worin A SiOₖ₁(CQ₂)ₙ₁, Si(CQ₂)ₙ₁O_{k1,} (CQ₂)ₙ₁Oₖ₁Si, (CQ₂)ₙ₁SiOₖ₁, Oₖ₁(CQ₂)ₙ₁Si oder Oₖ₁Si(CQ₂)ₙ₁ ist, worin k1 0 oder 1 ist, Q H oder F ist und n1 eine ganze Zahl zwischen 0 und 3 ist;
M C, N oder Si ist;
jedes der a₁, a₂ und a₃ unabhängig aus C, NR und = ausgewählt ist;
R eine C₁-C₁₅-Alkylgruppe_{,} eine C₂-C₁₅-Alkengruppe oder eine Alkoxygruppe (R₁₀) ist, worin die Alkengruppe CH=CH₂, CH=CHCH₃ (E, Z), CH₂CH=CH₂, CH=CHCH₂CH₃ (E, Z), CH₂CH=CHCH₃ (E, Z), CH₂CH₂CH=CH₂, CH=CHCH₂CH₂CH₃ (E, Z), CH₂CH=CHCH₂CH₃ (E, Z), CH₂CH₂CH=CHCH₃ (E, Z) oder CH₂CH₂CH₂CH=CH₂ ist;
R₁ H, eine C₁-C₁₅-Alkylgruppe oder eine C₂-C₁₅-Alkengruppe ist, worin die Alkengruppe CH=CH₂, CH=CHCH₃ (E, Z), CH₂CH=CH₂, CH=CHCH₂CH₃ (E, Z), CH₂CH=CHCH₃ (E, Z), CH₂CH₂CH=CH₂, CH=CHCH₂CH₂CH₃ (E, Z), CH₂CH=CHCH₂CH₃ (E, Z), CH₂CH₂CH=CHCH₃ (E, Z) oder CH₂CH₂CH₂CH=CH₂ ist;
X H, SiR₂R₃R₄, CF₃, OCF₃, CN, NCS, ein Halogenatom oder R ist;
jedes der R₂, R₃ und R₄ unabhängig voneinander aus R und einem Halogenatom ausgewählt ist; und
jedes der L₁, L₂, L₃, L₄, L₅ und L₇ unabhängig voneinander aus H, einem Halogenatom, CN, CF₃, OCF₃ und NCS ausgewählt ist.

2. Silizium enthaltende Verbindung gemäß Anspruch 1, die eine negative dielektrische Anisotropie hat.

3. Silizium enthaltende Verbindung gemäß Anspruch 1, die Stereoisomere hat.

4. Silizium enthaltende Verbindung gemäß Anspruch 3, worin die Stereoisomere der Silizium enthaltenden Verbindung in einem Verhältnis von trans-Isomer:cis-Isomer von 85-100:15-0 vorhanden sind.

5. Flüssigkristallzusammensetzung, die mindestens eine Silizium enthaltende organische Verbindung gemäß irgendeinem der Ansprüche 1 bis 4 umfasst.

6. Flüssigkristallzusammensetzung gemäß Anspruch 5, worin jedes Silizium enthaltende organische Verbindung in einer Menge von 1 bis 50 Gew.% auf Basis von 100 Gew.% des Gesamtgewichts der Zusammensetzung vorhanden ist.

7. Flüssigkristallanzeigegerät, das eine Flüssigkristallschicht umfasst, die aus der Flüssigkristallzusammensetzung gemäß Anspruch 5 oder 6 hergestellt ist.

8. Verfahren zur Herstellung einer Silizium enthaltenden Verbindung gemäß Anspruch 1, das durch das folgende Reaktionsschema dargestellt wird: 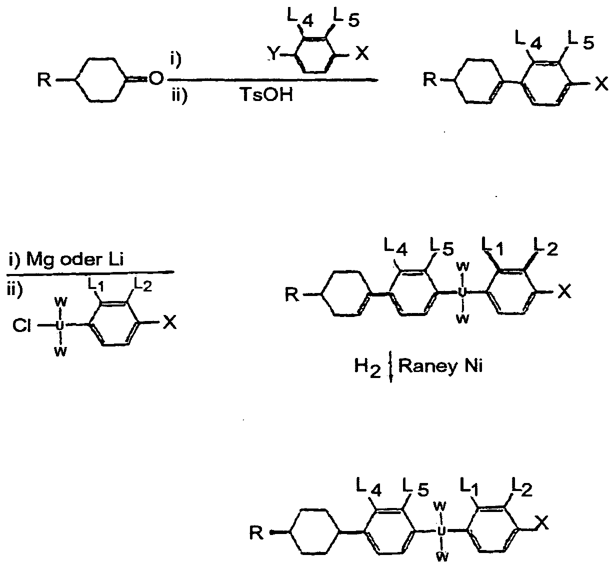 worin U SiOₖ₁(CQ₂)ₙ₁, Si(CQ₂)ₙ₁Oₖ₁, (CQ₂)ₙ₁Oₖ₁Si oder (CQ₂)ₙ₁SiOₖ₁ ist, worin k1 0 oder 1 ist, Q H oder F ist und n1 eine ganze Zahl zwischen 0 und 3 ist;
W Me, Et, F oder Cl ist;
Y Mg oder Li ist; X H, ein Halogenatom oder SiV₃ ist;
V aus H, Me, Et, F, Cl, OMe und OEt ausgewählt ist; und
R, L₁, L₂, L₄ und L₅ das gleiche ist wie in Anspruch 1 definiert.

9. Verfahren zur Herstellung einer Silizium enthaltenden Verbindung gemäß Anspruch 1, das durch das folgende Reaktionsschema dargestellt wird: 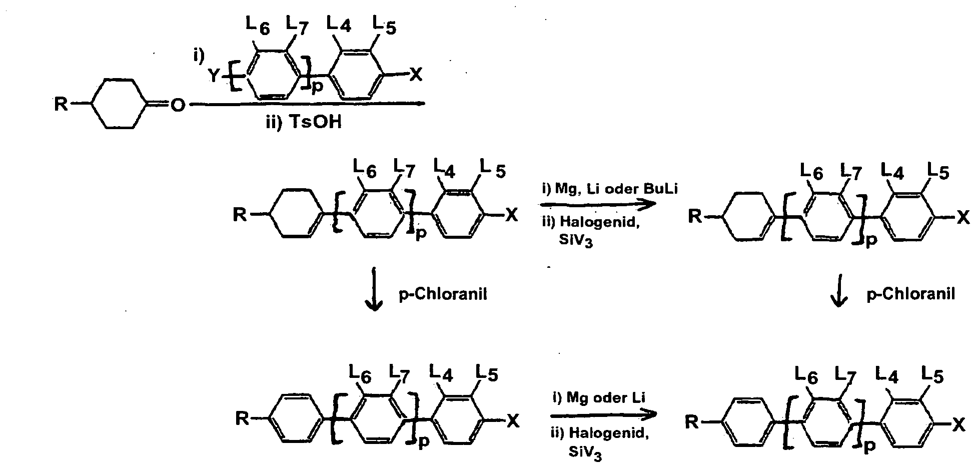 worin V aus H, Me, Et, F, Cl, OMe und OEt ausgewählt ist;
p eine ganze Zahl zwischen 0 und 2 ist;
Y Mg oder Li ist; X H oder ein Halogenatom ist;
L₆ unabhängig ausgewählt ist aus H, einem Halogenatom, CN, CF₃, OCF₃ und NCS; und
R, L₄, L₅ und L₇ das gleiche ist wie in Anspruch 1 definiert.

10. Verfahren zur Herstellung einer Silizium enthaltenden Verbindung gemäß Anspruch 1, das durch das folgende Reaktionsschema dargestellt wird: 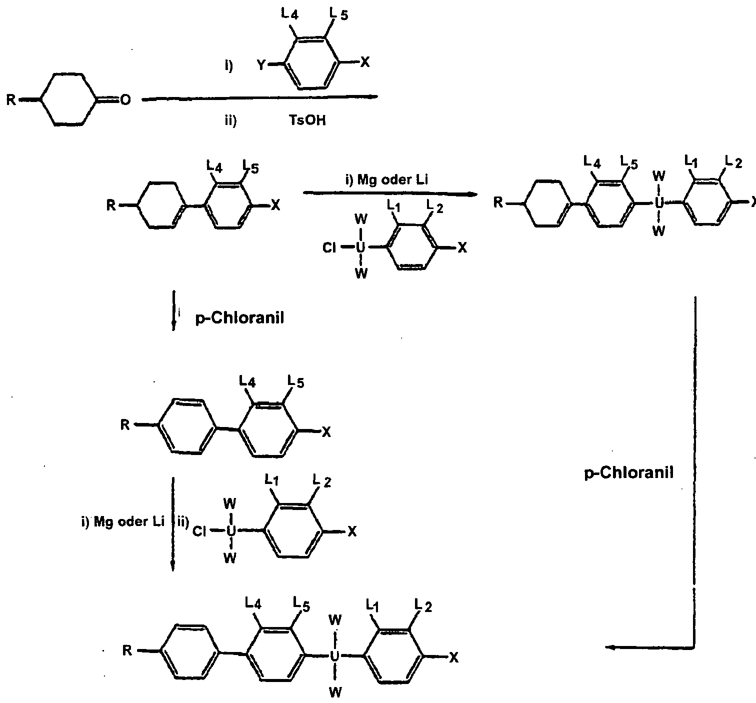 worin U SiOₖ₁(CQ₂)_{n1,} Si(CQ₂)ₙ₁Oₖ₁, (CQ₂)ₙ₁Oₖ₁Si oder (CQ₂)ₙ₁SiOₖ₁ ist, worin k1 0 oder 1 ist, Q H oder F ist und n1 eine ganze Zahl zwischen 0 und 3 ist;
W Me, Et, F oder Cl ist;
Y Mg oder Li ist; X H, ein Halogenatom oder SiV₃ ist;
V ausgewählt ist aus H, Me, Et, F, Cl, OMe und OEt; und
R, L₁, L₂, L₄ und L₅ das gleiche ist wie in Anspruch 1 definiert.

## Revendications

1. Composé contenant du silicium sélectionné à partir de : 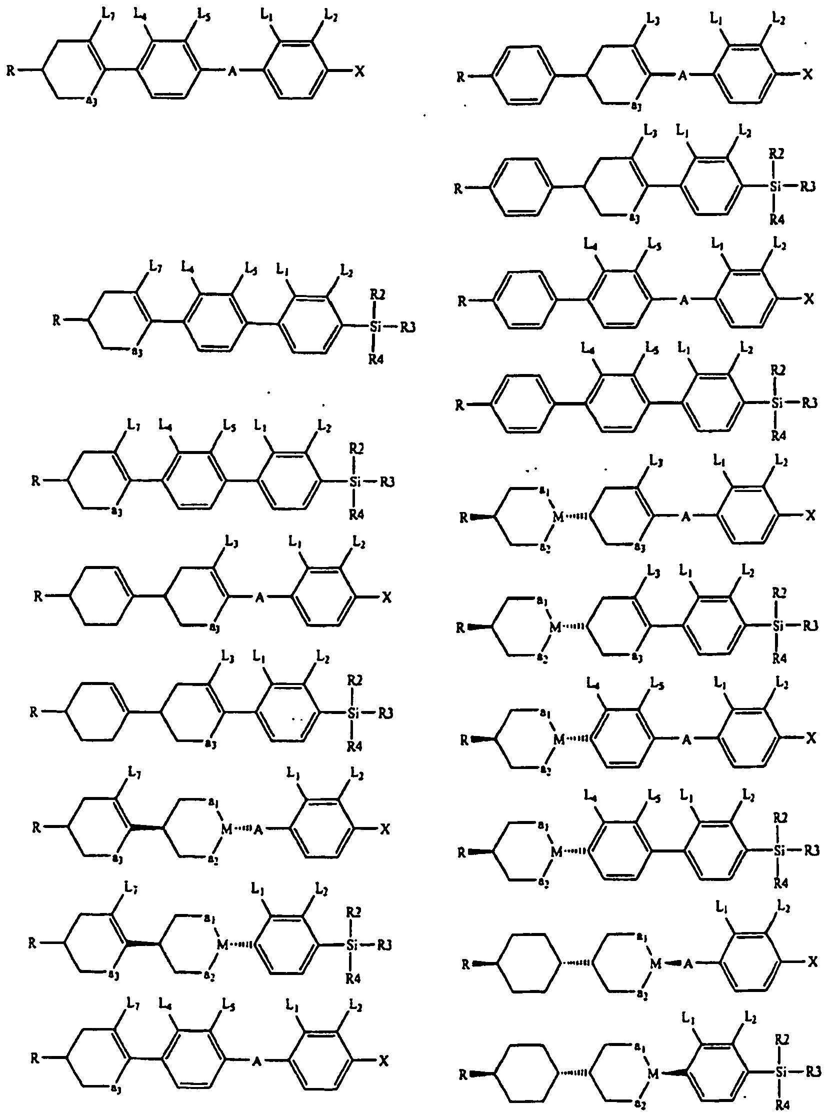 dans lequel A est SiOₖ₁(CQ₂)ₙ₁, Si(CQ₂)ₙ₁Oₖ₁, (CQ₂)ₙ₁Oₖ₁Si, (CQ₂)ₙ₁SiOₖ₁, Oₖ₁(CQ₂)ₙ₁Si ou Oₖ₁Si(CQ₂)ₙ₁, dans lesquels k1 est 0 ou 1, Q est H ou F, et n1 est un entier entre 0 et 3 ;
M est C, N ou Si ;
chacun de a₁, a₂ et a₃ est indépendamment sélectionné à partir de C, NR et O ;
R est un groupe alkyle C₁-C₁₅, un groupe alcène C₂-C₁₅ ou un groupe alcoxy (R₁O), dans lequel le groupe alcène est CH=CH₂, CH=CHCH₃ (E, Z), CH₂CH=CH₂, CH=CHCH₂CH₃ (E, Z), CH₂CH=CHCH₃
(E, Z), CH₂CH₂CH=CH₂, CH=CHCH₂CH₂CH₃ (E, Z), CH₂CH=CHCH₂CH₃ (E, Z), CH₂CH₂CH=CHCH₃ (E, Z) ou CH₂CH₂CH₂CH=CH₂ ;
R₁ est H, un groupe alkyle C₁-C₁₅, ou un groupe alcène C₂-C₁₅, dans lequel le groupe alcène est CH=CH₂, CH=CHCH₃ (E, Z), CH₂CH=CH₂, CH=CHCH₂CH₃ (E, Z), CH₂CH=CHCH₃ (E, Z), CH₂CH₂CH=CH₂, CH=CHCH₂CH₂CH₃ (E, Z), CH₂CH=CHCH₂CH₃ (E, Z), CH₂CH₂CH=CHCH₃ (E, Z) ou CH₂CH₂CH₂CH=CH₂ ;
X est H, SiR₂R₃R₄, CF₃, OCF₃, CN, NCS, un atome d'halogène ou R ;
chacun de R₂, R₃ et R₄ est indépendamment sélectionné à partir de R et d'un atome d'halogène ; et
chacun de L₁, L₂, L₃, L₄, L₅ et L₇ est indépendamment sélectionné à partir de H, d'un atome d'halogène, CN, CF₃, OCF₃ et NCS.

2. Composé contenant du silicium selon la revendication 1, qui a une anisotropie diélectrique négative.

3. Composé contenant du silicium selon la revendication 1, qui a des stéréo-isomères.

4. Composé contenant du silicium selon la revendication 3, dans lequel les stéréo-isomères du composé contenant du silicium sont présents dans un rapport de trans-isomère:cis-isomère de 85-100:15-0.

5. Composition de cristal liquide, qui comprend au moins un composé contenant du silicium selon l'une quelconque des revendications 1 à 4.

6. Composition de cristal liquide selon la revendication 5, dans lequel chaque composé contenant du silicium est présent en une quantité de 1 à 50 % en poids en se basant sur 100 % en poids du poids total de la composition.

7. Dispositif d'affichage à cristaux liquides qui comprend une couche de cristaux liquides préparée à partir de la composition de cristal liquide selon la revendication 5 ou la revendication 6.

8. Procédé pour préparer un composé contenant du silicium selon la revendication 1, qui est représenté par le système de réaction suivant : 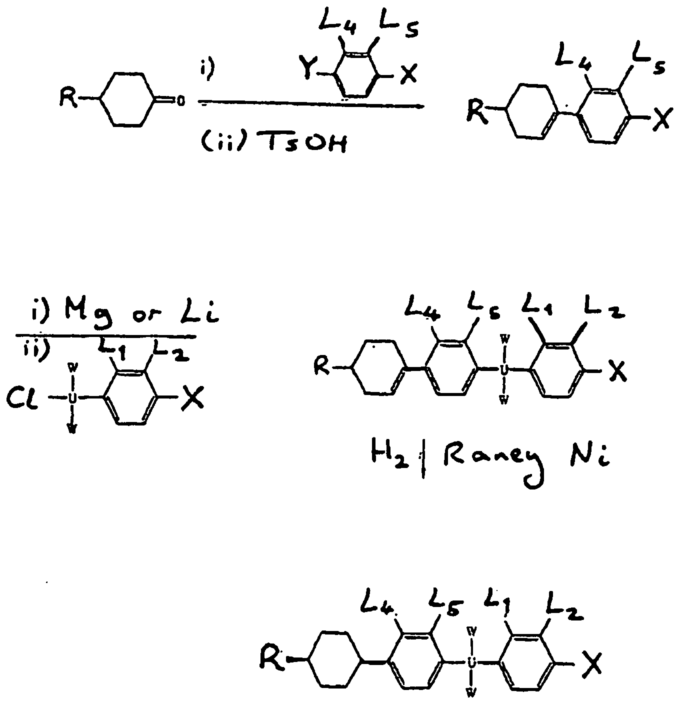 dans lequel U est SiOₖ₁(CQ₂)ₙ₁, Si(CQ₂)ₙ₁Oₖ₁, (CQ₂)ₙ₁Oₖ₁Si ou (CQ₂)ₙ₁SiOₖ₁, dans lesquels k1 est 0 ou 1, Q est H ou F, et n1 est un entier entre 0 et 3 ;
W est Me, Et, F ou Cl ;
Y est Mg ou Li ; X est H, un atome d'halogène ou SiV₃ ;
V est sélectionné à partir de H, Me, Et, F, Cl, OMe et OEt ; et
R, L₁, L₂, L₄ et L₅ sont les mêmes tels que définis dans la revendication 1.

9. Procédé pour préparer un composé contenant du silicium selon la revendication 1, qui est représenté par le système de réaction suivant : 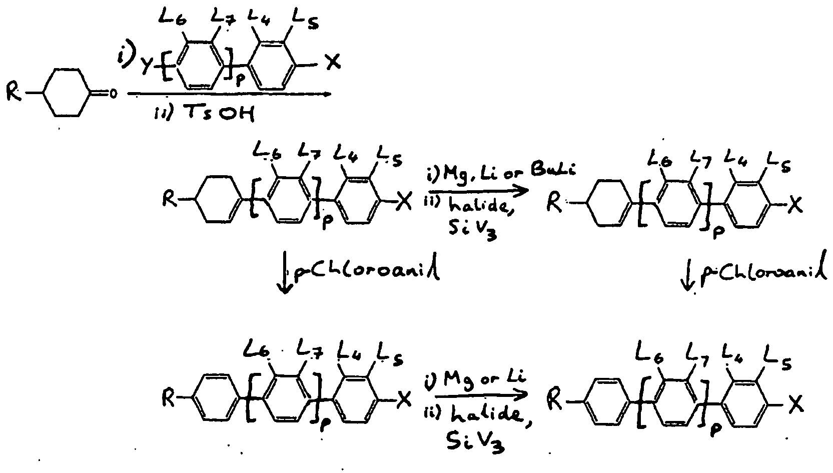 dans lequel V est sélectionné à partir de H, Me, Et, F, Cl, OMe et OEt ;
p est un entier entre 0 et 2 ;
Y est Mg ou Li ; X est H ou un atome d'halogène ; L₆ est indépendamment sélectionné à partir de H, un atome d'halogène, CN, CF₃, OCF₃ et NCS ; et
R, L₄, L₅ et L₇ sont les mêmes tels que définis dans la revendication 1.

10. Procédé pour préparer un composé contenant du silicium selon la revendication 1, qui est représenté par le système de réaction suivant : 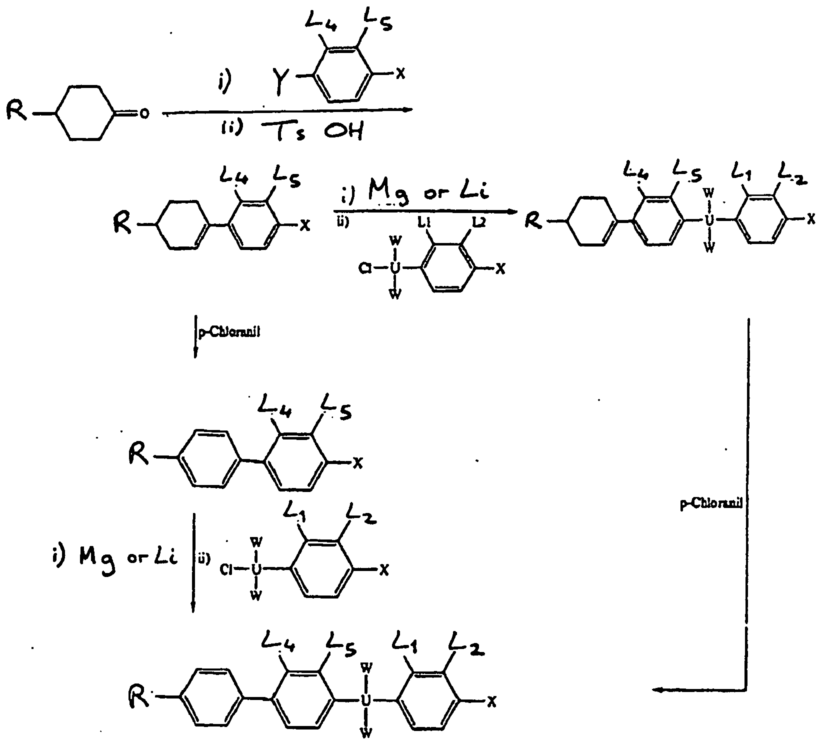 dans lequel U est SiOₖ₁(CQ₂)ₙ₁, Si(CQ₂)ₙ₁Oₖ₁, (CQ₂)ₙ₁Oₖ₁Si ou (CQ₂)ₙ₁SiOₖ₁, dans lesquels k1 est 0 ou 1, Q est H ou F, et n1 est un entier entre 0 et 3 ;
W est Me, Et, F ou C1 ;
Y est Mg ou Li ; X est H, un halogénure ou SiV₃ ;
V est sélectionné parmi H, Me, Et, F, Cl, OMe et OEt ; et
R, L₁, L₂, L₄ et L₅ sont les mêmes tels que définis dans la revendication 1.
